Europäisches Patentamt

European Patent Office

Office européen des brevets

(11) Publication number: **0 136 468 B1**

# EUROPEAN PATENT SPECIFICATION

(45) Date of publication of patent specification: **03.04.91**    (51) Int. Cl.<sup>5</sup>: **A01N 61/00**

(21) Application number: **84109216.6**

(22) Date of filing: **03.08.84**

The file contains technical information submitted
after the application was filed and not included in
this specification

(54) **Bird repellent compositions.**

(30) Priority: **15.09.83 AU 1431/83**

(43) Date of publication of application:
**10.04.85 Bulletin 85/15**

(45) Publication of the grant of the patent:
**03.04.91 Bulletin 91/14**

(84) Designated Contracting States:
**AT BE CH DE FR GB IT LI LU NL SE**

(56) References cited:
**CA-A- 705 016**
**CH-A- 487 582**
**US-A- 3 734 875**

(73) Proprietor: **HOT FOOT INTERNATIONAL PTY.
LTD.**
**117 Church Street**
**Hawthorn Victoria 3122(AU)**

(72) Inventor: **Snow, Roger**
**14 Kirkwood Avenue**
**Sandringham Victoria 3191(AU)**
Inventor: **Alldritt, Philip Brian**
**5 Keats Court**
**Bundoora Victoria 3083(AU)**

(74) Representative: **Rambelli, Paolo et al**
**Jacobacci-Casetta & Perani S.p.A. Via Alfieri
17**
**I-10121 Torino(IT)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

## Description

The present invention relates to animal repellants, particularly bird repellants. Bird repellants are well known. In general, bird repellant compositions function by coating at least a part of the surface to be protected with a tacky composition, contact with which will repel the birds.

CA-A-705016 discloses a composition based on polybutene polymers which can be sprayed or spread on surfaces in order to prevent birds from settling on them. CH-A-487 582 discloses a bird repellant paste containing polymethylacrylate and the thixotropic agent castor oil and a polar solvent.

However, known bird repellant compositions are deficient in a number of aspects. In particular, whilst the composition should be sticky or tacky, if it is too tacky it will pick up dust, leaves, etc. quickly and be rendered inefficient very quickly. Moreover, birds may become stuck to this surface. Similarly, the composition must be such that it is weather resistant and in such a form which will minimize flattening. It would be particularly advantageous if a bird repellant composition could be provided in a gel or bead form for delivery in cartridges such as is used for adhesives etc.

It is particularly advantageous to have a composition which may be delivered in a cartridge or like form since (apart from the obvious convenience), the delivery of the composition in the form of a bead allows for the coverage of a greater area effectively with the same amount of material. Moreover, drying out of the composition which will lead to deterioration thereof is minimized. The flattening of the composition is also minimized. It is a further advantage if the composition does not stain or damage any painted or preferred surface.

A further deficiency of bird repellant compositions of the prior art has been that they are ineffective in relation to certain types of birds. In particular, it has been noted that certain compositions are ineffective against certain birds but are effective against others. Particular difficulties are encountered with pigeons, starling and seagulls. It would be an advantage to have a bird repellant composition which would be effective against these types of birds in particular, as well as others.

Accordingly, it is an object of the present invention to overcome or at least alleviate at least some of the difficulties and deficiencies of the prior art.

Accordingly, in one aspect of the present invention there is provided a bird repellant composition which includes

(a) 75% to 98% by weight of a polymeric component, based on the total weight of the composition, which component includes at least a high molecular weight butene polymer component having a molecular weight of 1300 to 1500 and a low molecular weight butene polymer component having a molecular weight of 900 to 1000, and

(b) a hydrophobic organophilic thickening agent, and

(c) a polar organic swelling agent selected from an alcohol or a ketone.

It has been found that the bird repellant composition according to the first aspect of the present invention is effective against numerous types of birds including starlings, pigeons and large web-footed birds including seagulls and the like.

The polymeric component (a) may be present in an amount sufficient to provide a bird repellant composition with a desired degree of tackiness. The bird repellant composition should preferably be of sufficient tackiness to repel birds but not so tacky as to substantially retard the birds.

The polymeric component (a) is present in a major amount of the composition. The polymeric component is present in amounts of from approximately 75 to 98% by weight of the bird repellant composition. The polymer component may be present in amounts of from approximately 92.5% to 97.5% by weight of total composition, preferably 93% by weight.

The polymer component includes a high molecular weight and a low molecular weight butene polymer. One butene polymer may comprise a major amount of the polymeric composition. The polymeric component may further include other polymers or copolymers. The polymers may be selected to adjust the tackiness or viscosity as desired. The polymers may preferably be present in minor amounts. Preferably the butene polymer component comprises approximately 75% to 100% by weight of the polymeric component. The polymers may be selected from addition polymers e.g. rubbery polymer such as polyisobutylene vinyl polymers and acrylic polymers.

The polymeric component includes a high molecular weight butene polymer component and a low molecular weight butene polymer. The components may be in the form of a blend. The high molecular weight butene polymer and low molecular weight butene polymer may be present in any suitable relative amounts which will allow for the creation of the desired degree of tackiness in order to repel various birds but with a high enough viscosity to minimize the flattening of the gel over an extended period. It will be understood that as the gel flattens the contamination thereof will increase and the efficiency of the composition as a repellant will accordingly decrease.

The butene polymer may be a polybutene. The polybutene may be of the type sold under the trade designation HYVIS [R]. These are synthetic hydrocarbon polymers manufactured by polymerisation of olefins comprising isobutene. The polymers are long chain hydrophobic molecules with methyl group side chains. The polybutene sold under the designation HYVIS 10 [R] and available from B.P. Trading Ltd. is particularly preferred as the low molecular weight component. HYVIS 10 [R] has a molecular weight (MW) of approximately 900 - 1000. The polybutene polymer sold under the trade designation HYVIS 30 [R] may be used as the high molecular weight component. HYVIS 30 [R] has a molecular weight (MW) of approximately 1300 - 1500. The low molecular weight and high molecular weight butene polymers may be present in a weight ratio of approximately 1:1.

As it will be discussed below, the bird repellant composition may be manufactured utilizing the low molecular weight polymer and adding the high molecular weight polymer component at the end of the manufacturing process.

The thickening agent (b) of the bird repellant composition is a hydrophobic thickening agent. The thickening agent may be an inorganic thickening agent. A clay based thickening agent may be used. An organophilic clay may be used. A thickening agent of the type sold under the trade designation TIXOGEL [R] may be used. The TIXOGEL VP [R] thickening agent available from United Catalysts Inc. is particularly preferred. The TIXOGEL [R] is a clay based material containing montmorillinite and aluminium hydrosilicate together with suborganic radicals. The clay base material is solubilised in an organic medium.

The thickening agent may be present in a suitable amount which will provide the bird repellant composition with the requisite viscosity for use as a gel or bead composition. The thickening agent may be present in amounts of from 2 to 7% by weight, preferably 2.5 to 5% by weight, based on the weight of the total bird repellant composition. The thickening agent may be present in an amount of approximately 4 to 5% by weight based on the total amount of butene polymer.

The bird repellant composition according to the present invention further includes

(c) a swelling agent.

The swelling agent is a polar organic swelling agent selected from alcohols and ketones. The swelling agent may be selected from methanol, acetone and methylethyl ketone and mixtures thereof. The swelling agent may be present in amounts of from 30 to 50% by weight based on the total weight of thickener and swelling agent. The swelling agent may be present in amounts of approximately 40% by weight based on the total amount of thickening agent in the bird repellant composition. The swelling agent may be present in amounts of from approximately 1 to 3%, preferably 2% by weight based on the weight of the total bird repellant composition.

A particularly preferred bird repellant composition according to the present invention includes a high molecular weight butene polymer and a low molecular weight butene in approximately equal amounts. The total butene polymer content of the composition comprises 93% of the bird repellant composition. The other inert ingredients in the composition comprise the remaining 7% of the bird repellant composition. The bird repellant composition according to the present invention may further include other compounding ingredients. For example pesticides, fillers, extenders, colorants and other compounding ingredients may be included.

In accordance with a further aspect of the present invention there are provided methods of manufacturing a bird repellant composition of the type described above as defined in the appended claims.

According to one aspect the method includes:

(a) providing an effective amount of

   (i) the polymer component, and

   (ii) a thickening agent, and

(b) dispersing a thickening agent in the polymeric component.

The method of manufacturing a bird repellant composition according to this aspect of the present invention further includes the step of

(c) swelling the dispersion so formed.

The dispersing of the thickening agent in the polymeric component may be conducted at elevated temperature. A temperature of approximately 45 to 55°C may be used. The dispersing process may be continued as the temperature is raised from approximately 45°C to approximately 55°C. The dispersion process may be conducted under high shear. The dispersion process may be conducted in a high speed mixer. The mixing process may continue for approximately 10 minutes.

The high speed mixing may then be continued for approximately 20 minutes or more as a swelling agent is added to the composition.

At the end of the period, the bird repellant composition may be filled into appropriate cartridges or left to stand as required. It will be understood that the ability to allow the composition to stand is a particular advantage in the art.

As discussed above the polymeric component includes a low molecular weight butene polymer component and a high molecular butene polymer weight component. Accordingly, the method of manufacturing a bird repellant composition may include as a preliminary step

(a') blending a high molecular weight polybutene polymer and a low molecular weight polybutene polymer.

The blending of the two molecular weight polymers may be conducted at elevated temperatures as discussed above in relation to the dispersion step.

Alternatively, the method as described above may be run using the low molecular weight or high molecular weight polymer component alone. In this embodiment, the method of manufacturing a bird repellant composition further comprises the step of

(d) adding a further butene polymer component to the bird repellant composition so formed. The addition of a further polybutene component at the end of the process may be conducted whilst the high shear (e.g. high speed mixing) is continued.

The present invention will now be more fully described in relation to the following examples. It should be understood, however, that the discussion following is illustrative only and should not be taken in any way as a restriction on the generality of the invention as described above.

## EXAMPLE 1

### Bird Repellant Composition

| Component | % by weight |
|---|---|
| Polybutene (MW 900-1000) | 46.5 |
| Polybutene (MW 1300-1500) | 46.5 |
| Thickening agent (TIXOGEL VP [R]) | 5.0 |
| Swelling agent (methylethyl ketone) | 2.0 |

Two grades of polybutene e.g. Hyvis 10 [R] and Hyvis 30 [R], were blended and heated in equal proportions into a suitable heated mixing vat. Blending continued until the temperature reached approximately 45-55°C. The thickening agent (TIXOGEL VP [R]) was mixed slowly into the polymer composition and mixing was continued for approximately 10 minutes.

The swelling agent (Methylethyl ketone) was then added and mixing continued for at least 20 minutes.

It has been found that the composition so formed may be provided in a cartridge form for delivery as a gel or bead. This has the particular advantage that it is possible to cover more area per tube than with a liquid or other coating formulation. The bird repellant composition in this form moreover, does not dry out as quickly as prior art products and minimizes flattening.

Further, the composition so formed is colourless and may be used in areas where a coloured gel would be a disadvantage.

4

EP 0 136 468 B1

## EXAMPLE 2
### Repellant Composition

| Component | % by weight |
|---|---|
| Polybutene (MW 900-1000) | 46.5 |
| Polybutene (MW 1300-1500) | 46.5 |
| Thickening agent | 5.0 |
| Swelling agent | 2.0 |
| | 100.00 |

### EXAMPLE OF ABOVE

| | |
|---|---|
| Item 1. | Hyvis 10 (R) |
| Item 2. | Hyvis 30 (R) |
| Item 3. | Tixogel VP (R) |
| Item 4. | Methanol, Acetone, MEK |

### METHOD OF MANUFACTURE

75 kgs of Polybutene (MW 900-1000) is placed into suitable heated mixing vat, fitted with a high power agitator and heated to approximately 45-55° C. While mixing slowly 8 kgs thickening agent is added and mixed till agent has been thoroughly dispersed. Then 3.2 kgs of swelling agent is slowly added and mixing continued for at least 20 minutes, after which time a considerable viscosity increase will be achieved.

An additional 75 kgs of Polybutene (MW 1300-1500) is blended into composition and mixing continued till total mix is uniform. Mixer is turned off and product run into suitable containers or package as required.

Finally, it is to be understood that various other modifications and/or alterations may be made without departing from the spirit of the present invention as outlined herein.

### Claims

1. A bird repellant composition including:
   (a) 75% to 98% by weight of a polymeric component, based on the total weight of the composition, which component includes a high molecular weight butene polymer component having a molecular weight of 1300 to 1500 and a low molecular weight butene polymer component having a molecular weight of 900 to 1000, and
   (b) a hydrophobic organophilic thickening agent, and
   (c) a polar organic swelling agent selected from an alcohol or ketone.

2. A bird repellant composition according to claim 1 wherein the composition is suitable for use in a cartridge or the like form.

3. A bird repellant composition according to claim 1 wherein the polymeric component is present in an amount of from 92 to 97% by weight based on the total weight of the composition.

4. A bird repellant composition according to any one of the preceding claims, wherein the high molecular weight butene polymer component and low molecular weight butene polymer component are present in a weight ratio of 1:1.

5. A bird repellant composition according to any one of the preceding claims wherein the thickening agent

5

is present in amounts of 1 to 7% by weight based on the total weight of the bird repellant composition.

6. A bird repellant composition according to any one of the preceding claims wherein the hydrophobic organophilic thickening agent is an organophilic clay containing montmorillinite and aluminium hydrosilicate together with suborganic radicals.

7. A bird repellant composition according to any one of the preceding claims wherein the composition is in the form of a gel.

8. A bird repellant composition according to any one of the preceding claims wherein the swelling agent is selected from methanol, acetone, methylethyl ketone and mixtures thereof.

9. A bird repellant composition according to any one of the preceding claims wherein the swelling agent is present in amounts of from 1 to 3% based on the total weight of the bird repellant composition.

10. A method of preparing a bird repellant composition according to any of claims 1 to 9 comprising:
(a) blending a high molecular weight polybutene having a molecular weight of 1300 to 1500 with a low molecular weight polybutene having a molecular weight of 900 to 1000 at temperatures of 45 to 55°C;
(b) dispersing the hydrophobic organophilic thickening agent in 75 to 98% by weight based on the total weight of the composition of the polybutene blend; and
(c) swelling the dispersion so formed by adding thereto the polar organic solvent swelling agent.

11. The method of claim 10 wherein the dispersion of step (b) is conducted at a temperature of approximately 45 to 55°C under high shear for 10 minutes.

12. The method of claim 11 wherein the polar organic solvent is added to the dispersion with high shear mixing for at least 20 minutes.

13. A method of preparing a bird repellant composition according to any of claims 1 to 9 comprising:
(a) dispersing the hydrophobic organophilic thickening agent in a low molecular weight polybutene having a molecular weight of 900 to 1000 at 45 to 55°C;
(b) swelling the dispersion so formed by adding thereto the polar organic solvent swelling agent; and
(c) adding a high molecular weight polybutene having a molecular weight of 1300 to 1500 to the swollen dispersion at a temperature of 45 to 55°C with high shear mixing to form a substantially homogeneous blend, wherein the high molecular weight polybutene and the low molecular weight polybutene are 75 to 98% by weight of the composition.

**Revendications**

1. Composition répulsive pour oiseaux comprenant:
(a) 75 % à 98 % en poids, par rapport au poids total de la composition, d'un composant polymère, lequel composant comprend un polymère de butène de haut poids moléculaire ayant un poids moléculaire de 1300 à 1500 et un polymère de butène de bas poids moléculaire ayant un poids moléculaire de 900 à 1000, et
(b) un agent épaississant organophile hydrophobe, et
(c) un agent gonflant organique polaire choisi parmi un alcool et une cétone.

2. Composition répulsive pour oiseaux selon la revendication 1, laquelle composition convient pour être utilisée dans une cartouche ou une forme analogue.

3. Composition répulsive pour oiseaux selon la revendication 1, dans laquelle le composant polymère est présent en une quantité de 92 à 97 % en poids, par rapport au poids total de la composition.

4. Composition répulsive pour oiseaux selon l'une quelconque des revendications précédentes, dans laquelle le polymère de butène de haut poids moléculaire et le polymère de butène de bas poids moléculaire sont présents en un rapport en poids de 1:1.

5. Composition répulsive pour oiseaux selon l'une quelconque des revendications précédentes, caractérisée en ce que l'agent épaississant est présent en une quantité de l à 7 % en poids par rapport au poids total de la composition répulsive pour oiseaux.

6. Composition répulsive pour oiseaux selon l'une quelconque des revendications précédentes, dans laquelle l'agent épaississant organophile hydrophobe est une argile organophile contenant de la montmorillonite et de l'hydrosilicate d'aluminium ainsi que des radicaux sous-organiques.

7. Composition répulsive pour oiseaux selon l'une quelconque des revendications précédentes, laquelle composition est sous la forme d'un gel.

8. Composition répulsive pour oiseaux selon l'une quelconque des revendications précédentes, dans laquelle l'agent gonflant est choisi parmi le méthanol, l'acétone, la méthyléthylcétone et leurs mélanges.

9. Composition répulsive pour oiseaux selon l'une quelconque des revendications précédentes, dans laquelle l'agent gonflant est présent et une quantité de 1 à 3 % par rapport au poids total de la composition répulsive pour oiseaux.

10. Procédé de préparation d'une composition répulsive pour oiseaux selon l'une quelconque des revendications 1 à 9 consistant à :
   (a) mélanger un polybutène de haut poids moléculaire ayant un poids moléculaire de 1300 à 1500 avec un polybutène de bas poids moléculaire ayant un poids moléculaire de 900 à 1000 à des températures de 45 à 55° C ;
   (b) disperser l'agent épaississant organophile hydrophobe dans 75 à 98 % en poids, par rapport au poids total de la composition, du mélange de polybutènes ; et
   (c) faire gonfler la dispersion ainsi formée en y ajoutant le solvant organique polaire comme agent gonflant.

11. Procédé selon la revendication 10, dans lequel la dispersion de l'étape (b) est conduite à une température d'environ 45 à 55° C sous fort cisaillement pendant 10 minutes.

12. Procédé selon la revendication 11, dans lequel le solvant organique polaire est ajouté à la dispersion avec une action de mélange à fort cisaillement pendant au moins 20 minutes.

13. Procédé de préparation d'une composition répulsive pour oiseaux selon l'une quelconque des revendications l à 9 consistant à :
   (a) disperser l'agent épaississant organophile hydrophobe dans un polybutène de bas poids moléculaire ayant un poids moléculaire de 900 à 1000 entre 45 et ,55° C ;
   (b) faire gonfler la dispersion ainsi formée en y ajoutant le solvant organique polaire comme agent gonflant ; et
   (c) ajouter un polybutène de haut poids moléculaire ayant un poids moléculaire de 1300 à 1500 à la dispersion gonflée à une température de 45 à 55° C avec une action de mélange à fort cisaillement pour former un mélange sensiblement homogène, le polybutène de haut poids moléculaire et le polybutène de bas poids moléculaire constituant 75 à 98 % en poids de la composition.

**Ansprüche**

1. Vogelabwehrzusammensetzung, beinhaltend:
   (a) 75 bis 98 Gew.% einer polymeren Komponente, bezogen auf das Gesamtgewicht der Zusammensetzung, wobei die Komponente eine hochmolekulargeiwichtige Butenpolymerkomponente mit einem Molekulargewicht von 1300 bis 1500 und eine niedermolekulargewichtige Butenpolymerkomponente mit einem Molekulargewicht von 900 bis 1000 beinhaltet,
   (b) ein hydrophobes organophiles Verdickungsmittel und
   (c) ein polares organisches Quellmittel, gewählt aus einen Alkohol oder Keton.

2. Vogelabwehrzusammensetzung nach Anspruch 1, wobei die Zusammensetzung geeignet ist zur Verwendung in einer Patrone oder ähnlichen Form.

3. Vogelabwehrzusammensetzung nach Anspruch 1, wobei die polymere Komponente in einer Menge von 92 bis 97 Gew.-% vorliegt, bezogen auf das Gesamtgewicht der Zusammensetzung.

4. Vogelabwehrzusammensetzung nach mindestens einem der vorangehenden Ansprüche, wobei die hochmolekulargewichtige Butenpolymerkomponente und die niedermolekulargewichtige Butenpolymerkomponente in einem Gewichtsverhältnis von 1 : 1 vorliegen.

5. Vogelabwehrzusammensetzung nach mindestens einem der vorangehenden Ansprüche, wobei das Verdickungsmittel in Mengen von 1 bis 7 Gew.-% vorliegt, bezogen auf das Gesamtgewicht der Vogelabwehrzusammensetzung.

6. Vogelabwehrzusammensetzung nach mindestens einem der vorangehenden Ansprüche, wobei das hydrophobe organophile Verdickungsmittel ein organophiler Ton ist, enthaltend Montmorillinit und Aluminiumhydrosilikat zusammen mit suborganischen Resten.

7. Vogelabwehrzusammensetzung naoh mindestens einem der vorangehenden Ansprüche, wobei die Zusammensetzung in Form eines Gels vorliegt.

8. Vogelabwehrzusammensetzung nach mindestens einem der vorangehenden Ansprüche, wobei das Quellmittel aus Methanol, Aceton, Methylethylketon und Mischungen hiervon gewählt ist.

9. Vogelabwehrzusammensetzung nach mindestens einem der vorangehenden Ansprüche, wobei das Quellmittel in Mengen von 1 bis 3% vorliegt, bezogen auf das Gesamtgewicht der Vogelabwehrzusammensetzung.

10. Verfahren zur Herstellung einer Vogelabwehrzusammensetzung nach mindestens einem der Ansprüche 1 bis 9, umfassend:
    (a) Vermischen eines hochmolekulargewichtigen Polybutens mit einem Molekulargewicht von 1300 bis 1500 mit einem niedermolekulargewichtigen Polybuten mit einem Molekulargewicht von 900 bis 1000 bei Temperaturen von 45 bis 50° C;
    (b) Dispergieren des hydrophoben organophilen Verdickungsmittels in 75 bis 98 Gew.-%, bezogen auf das Gesamtgewicht der Zusammensetzung, der Polybutenmischung; und
    (c) Quellen der so gebildeten Dispersion durch Zugeben des polaren organischen Quell-Lösungsmittels hierzu.

11. Verfahren nach Anspruch 10, wobei das Dispergieren der Stufe (b) bei einer Temperatur von ungefähr 45 bis 55° C unter hoher Scherkraft über 10 Minuten durchgeführt wird.

12. Verfahren nach Anspruch 11, wobei das polare organische Lösungsmittel zu der Dispersion unter Mischen mit hoher Scherkraft über mindestens 20 Minuten zugegeben wird.

13. Verfahren zur Herstellung einer Vogelabwehrzusammensetzung nach mindestens einem der Ansprüche 1 bis 9, umfassend:
    (a) Dispergieren des hydrophoben organophilen Verdickungsmittels in einem niedermolekulargewichtigen Polybuten mit einem Molekulargewicht von 900 bis 1000 bei 45 bis 55° C;
    (b) Quellen der so gebildeten Dispersion durch Zugeben des polaren organischen Quell-Lösungsmittels hierzu; und
    c) Zugeben eines hochmolekulargewichtigen Polybutens mit einem Molekulargewicht von 1300 bis 1500 zu der gequollenen Dispersion bei einer Temperatur von 45 bis 55° C unter Mischen mit hoher Scherkraft zu Bildung einer im wesentlichen homogenen Mischung, wobei das hochmolekulargewichtige Polybuten und das niedermolekulargewichtige Polybuten 75 bis 98 Gew.-%` der Zusammensetzung ausmachen.